# EUROPÄISCHE PATENTSCHRIFT

(11) **EP 1 325 245 B1**
(45) Veröffentlichungstag und Bekanntmachung des Hinweises auf die Patenterteilung: **24.05.2006**
(21) Anmeldenummer: 02774447.3
(22) Anmeldetag: 10.10.2002
(51) Int. Cl.: F16F 1/393, F16C 11/06

(54) **SCHWINGUNGSGEDÄMPFTES GUMMILAGER**
RUBBER BEARING WITH ANTI-VIBRATION SYSTEM
COUSSINET EN CAOUTCHOUC A SYSTEME ANTIVIBRATIONS

(30) Priorität: 12.10.2001 DE 10150189
(43) Veröffentlichungstag der Anmeldung: 09.07.2003
(73) Patentinhaber: ZF Lemförder Metallwaren AG, 49441 Lemförde (DE)
(72) Erfinder: RECHTIEN, Martin, 49434 Neuenkirchen-Vörden (DE)
(86) Internationale Anmeldenummer: PCT/DE2002/003811
(87) Internationale Veröffentlichungsnummer: WO 2003/033934

(56) Entgegenhaltungen:
- EP-A- 0 553 565
- US-A- 5 058 867
- US-A- 5 364 191
- US-A- 5 902 050
- US-B1- 6 273 406

## Beschreibung

Die vorliegende Erfindung betrifft ein schwingungsgedämpftes Gummilager mit einem Innenteil, dass von einer Außenhülse umgeben ist, wobei zwischen dem Innenteil und der Außenhülse ein Elastomerringkörper zur Schwingungsdämpfung vorgesehen ist.

Ein bevorzugtes Einsatzgebiet derartiger Gummilager ist der Fahrzeugbau, wo dieses Bauteil beispielsweise für die Befestigung eines Schwingungsdämpfers an einem Trägerteil eines Fahrzeuges zum Einsatz kommt. Das Trägerteil kann als Radträger oder als Hinterachslenker ausgebildet sein. Der Einsatz des erfindungsgemäßen Gummilagers ist jedoch nicht auf den Bereich des Fahrzeugbaus beschränkt. So kann das schwingungsgedämpfte Gummilager auch beispielsweise dem Werkzeugmaschinenbau, Transportmittelbau oder anderen Fachgebieten eingesetzt werden.

Es gehört zum allgemeinen Stande der Technik ein schwingungsgedämpftes Gummilager durch eine zylindrische Außenhülse aus Stahl herzustellen, in welche ein ebenfalls zylindrisch geformter Elastomerringkörper eingesetzt ist, in dem wiederum ein ebenfalls zylindrisches Innenteil aus Stahl eingesetzt ist. Dieses Gummilager erhält seine schwingungsdämpfende Eigenschaft durch den Elastomerringkörper, welcher meist aus gewöhnlichem Gummi besteht. Das schwingungsgedämpfte Gummilager ist zwischen einem ersten Trägerteil über dessen Außenhülse, welche auch einstückig mit dem ersten Trägerteil ausgebildet sein kann, und einem zweiten Trägerteil, welches am Innenteil befestigt ist, angeordnet. Hierdurch wird eine schwingungsgedämpfte Lagerung des ersten Trägerteils gegenüber dem zweiten Trägerteil erzielt.

Zwar ist dieses Gummilager durch den ineinandergeschachtelten Aufbau seiner Einzelteile einfach zu fertigen und zu montieren; gleichwohl sind besondere Maßnahmen zur Verhinderung einer relativen axialen Bewegung der Trägerteile erforderlich, damit das Gummilager nicht auseinander fällt.

Es ist auch allgemein bekannt, die einzelnen Bauteile fest miteinander zu verbinden. Diese Verbindung erfolgt über ein Anvulkanisieren des Elastomerringkörpers an der Außenhülse sowie am Innenteil. Allerdings weist ein derartig ausgebildetes Gummilager den Nachteil auf, dass durch einen Winkelversatz des ersten Trägerteils gegenüber dem zweiten Trägerteil im Elastomerringkörper gegenüberliegende Bereiche von extremer Zug- und Druckbeanspruchung auftreten. Insbesondere in den durch Zug beanspruchten Bereichen kommt es im Extremfall zu einer Rissbildung im Elastomerringkörper, da dessen Material für eine Zugbeanspruchung nicht geeignet ist. Derselbe Nachteil tritt auch bei einer extremen Axialbeanspruchung des derartig einstückig aufgebauten Gummilagers auf. Dokument US-A-5364191 zeigt die Merkmale des Oberbegriffs von Anspruch 1.

Aus der DE 100 11 124 A1 geht ein Gummilager hervor, bei dem die vorstehend aufgeführten Nachteile dadurch verhindert werden, dass das Innenteil mit einer außenradialen atmosphärischen Anformung zur Bildung eines Kugelgelenks versehen ist. Diese Anformung wirkt mit einer korrespondierend ausgebildeten Außenhülse zusammen. Zwischen der Außenhülse und dem Innenteil ist ein Elastomerringkörper mit gleichbleibender Wandstärke angeordnet, der gleitend an der atmosphärischen Anformung des Innenteils zur Anlage kommt. Durch eine derartige Ausführung wird es möglich, die Lebensdauer des schwingungsgedämpften Gummilagers in erheblichem Maße gegenüber denjenigen Gummilagern zu steigern, bei denen der Elastomerringkörper festhaftend zwischen dem Innenteil und der Außenhülse angeordnet ist. Durch die kugelgelenkartige Ausbildung wird in Verbindung mit der gleitenden Anlage des Innenteils des Elastomerringkörper, dieser ausschließlich mit Druck belastet. Dieses gilt sowohl bei einer axialen Belastung als auch bei einer radialen Belastung des Gummilagers als auch bei einer Auswinkelung des Innenteils gegenüber der Außenhülse, also bei kardanischer Belastung. Ein Nachteil dieses schwingungsgedämpften Gummilagers besteht jedoch darin, dass eine Erhöhung der Federsteifigkeit in Belastungsrichtung durch den konstruktiven Aufbau des schwingungsgedämpften Gummilagers begrenzt ist. Die Federsteifigkeit kann durch Einsatz eines härteren Gummimaterials, Reduzierung der Wandstärke des Elastomerringkörpers oder eine Verbreiterung des Gummilagers erzielt werden. Allerdings steigt damit gleichzeitig auch die zwischen dem Innenteil und dem Elastomerringkörper zu überwindende Gleitreibung.

Es ist daher die Aufgabe der vorliegenden Erfindung, ein schwingungsgedämpftes Gummilager der vorstehend beschriebenen Art dahingehend weiter zu verbessern, dass über ein großes Federsteifigkeitsspektrum optimale Gleitreibungseigenschaften zwischen den relativ zueinanderbewegbaren Bauteile bei einfachem Aufbau realisierbar sind.

Die Aufgabe wird ausgehend von einem schwingungsgedämpften Gummilager gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass ein Elastomerringkörper außenradial an der Innenwandung der Außenhülse angebracht ist, und innenradial an einer hülsenartigen Lagerschale angebracht ist, die unter Bildung eines Kugelgelenks gleitend mit dem Innenteil zusammenwirkt.

Ein Vorteil der erfindungsgemäßen Merkmale liegt insbesondere darin, dass die zwischen der hülsenartigen Lagenschale und dem Innenteil vorhandenen guten Gleitreibungseigenschaften unabhängig von der Wahl der Federsteifigkeit des Elastomerringkörpers ist. So führt die Wahl eines härteren Gummis für den Elastomerringkörper zum Zwecke der Einstellung einer höheren Federsteifigkeit nicht dazu, dass hierdurch auch die Gleitreibung am Kugelgelenk zunimmt. Diese Eigenschaft wird durch eine örtliche Trennung vom Bereich des Kugelgelenks zum Bereich des Schwingungsdämpfers über die hülsenartige Lagerschale erzielt. Das erfindungsgemäße schwingungsgedämpfte Gummilager zeichnet sich durch sehr geringe Losbrech- und Bewegungsmomente aus. Dies wird für kleine Bewegungsamplituden durch die Molekularbewegung im Gummiwerkstoff des Elastomerringkörpers realisiert, welche kaum durch äußere Kräfte beeinflusst wird. Durch das Zusammenwirken des Innenteils mit dem Außenteil unter Dazwischenschaltung des Kugelgelenks folgt eine wirkungsvolle Sicherung gegen ein axiales Auswandern des Gummilagers.

Vorzugsweise ist der Elastomerringkörper an den benachbarten Bauteilen, nämlich der Außenhülse einerseits sowie der Lagerschale andererseits anvulkanisiert, angeklebt oder in anderer geeigneter Weise stoffschlüssig verbunden. In einfacher Weise kann dieses einstückige Bauteil als Gummimetallteil angefertigt werden. Die Außenhülse oder die Lagerschale sowie auch das Innenteil bestehen vorzugsweise aus einem Kunststoff, einem Leichtmetall oder aus Stahl. Insbesondere die hülsenartige Lagerschale kann - wegen ihrer relativ komplizierten Formgebung und zur Erzielung guter Gleitreibungseigenschaften - aus Kunststoff im Spritzgießverfahren hergestellt werden.

Über die Außenhülse des schwingungsgedämpften Gummilagers kann eine Befestigung an einem ersten Trägerteil - beispielsweise eines Fahrzeuges - durch Einpressen, Einkleben, Einschrauben, Einspannen oder in ähnlicher Weise in eine korrespondierende Ausnehmung des ersten Trägerteils erfolgen. Daneben ist es auch möglich, die Außenhülse des erfindungsgemäßen Gummilagers als Bestandteil des ersten Trägerteils einstückig mit diesem auszubilden. Diese Variante ist insbesondere dann geeignet, wenn das erste Trägerteil ein hydraulischer Schwingungsdämpfer oder dergleichen ist.

Das Innenteil des Gummilagers ist vorzugsweise rohrförmig ausgebildet und mit einer außenradialen atmosphärischen Anformungsbildung des Kugelgelenks versehen, welche mit der korrespondierend geformten Lagerschale zusammenwirkt, um eine Schraube zur Befestigung an einem zweiten Trägerteil - beispielsweise einem Querlenker eines Fahrgestells - aufzunehmen.

Gemäß der Erfindung ist im beidseitigen Übergangsbereich zwischen der sphärischen Anformung des Innenteils und den benachbarten Rohrabschnitten je eine Dichtring zur Abdichtung des hiervon eingeschlossenen Gummilagerbereichs vorgesehen. Diese einfache Maßnahme verhindert ein Eindringen von Schmutz und Staub in den Gummilagerbereich. Die beiden Dichtringe sind in zugeordneten Umfangsnuten seitens des Innenteils oder auch seitens der Lagerschale fixiert. Als zusätzliche Abdichtungsmaßnahme kann bei den Stirnseiten des Gummilagers je ein zwischen dem Innenteil einerseits und der Lagerschale andererseits angeordneter Faltenbalk vorgesehen werden. Der Faltenbalk kann daneben auch zwischen dem Innenteil einerseits und der Außenhülse andererseits angeordnet werden, so dass dieser auch den Bereich des Elastomerringkörpers mit abdeckt.

Gemäß einer weiteren die Montage des erfindungsgemäßen Gummilagers verbessernden Maßnahme ist die mit dem Innenteil korrespondierende Lagenschale axial geteilt aufgebaut, so dass ein Innenhülsengrundteil mit einem Innenhülsendeckelteil zusammenfügbar ist. Das Zusammenfügen sollte zur Ermöglichung einer Demontage lösbar über eine Schraub- oder Schnappverbindung erfolgen. Es ist jedoch auch denkbar, dass Innenhülsengrundteil mit dem Innenhülsendeckelteil unlösbar, vorzugsweise über eine Kleb- oder Schweißverbindung, miteinander nach Montage des Innenteils zu verbinden.

Weitere die Erfindung verbessernde Maßnahmen werden nachfolgend gemeinsam mit der Beschreibung eines bevorzugten Ausführungsbeispiels der Erfindung anhand der Figuren näher dargestellt.

Es zeigt:
- Fig. 1: einen prinzipiellen Teillängsschnitt eines erfindungsgemäßen schwingungsgedämpften Gummilagers,
- Fig.2: einen detaillierten Längsschnitt durch ein erfindungsgemäß schwingungsgedämpftes Gummilager.

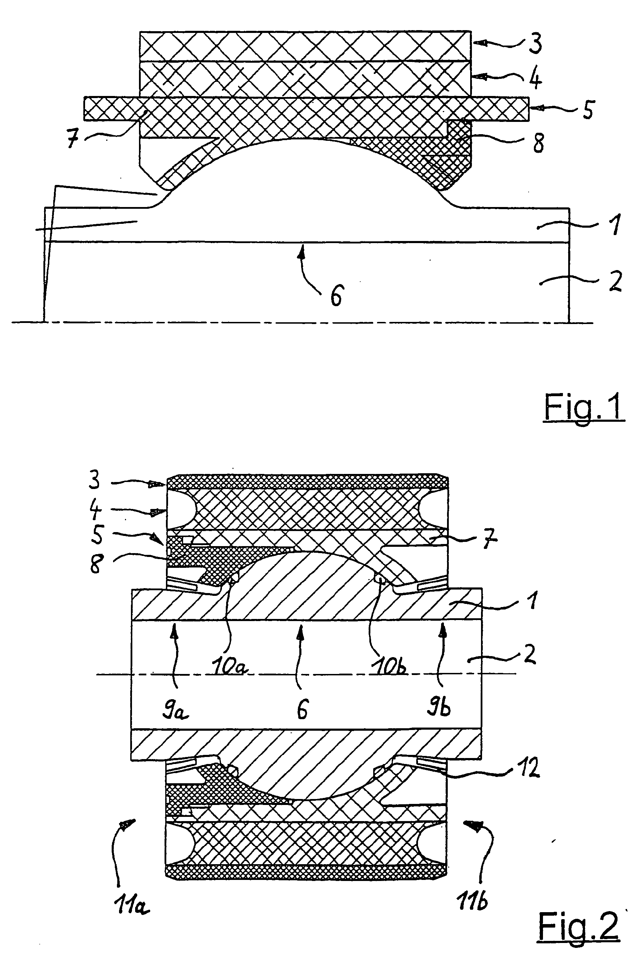

Das Gummilager gemäß Fig.1 weist ein Innenteil 1 auf, welches über eine koaxiale Durchgangsbohrung 2 an einem - hier nicht gezeigten - ersten Trägerteil über eine Schraubverbindung befestigt ist. Mit einem zweiten - hier ebenfalls nicht gezeigten-Trägerteil wirkt eine Außenhülse 3 bestehend aus einem starren Material zusammen. Das Innenteil 1 ist aus Stahl gefertigt, wogegen die Außenhülse 3 aus einem Kunststoff besteht. Zwischen dem Innenteil 1 und der Außenhülse 3 ist ein Elastomerringkörper 4 zur Schwingungsdämpfung angeordnet. Der Elastomerringkörper 4 ist außenradial an der Innenwandung der Außenhülse 3 direkt angeformt und innenradial an einer hülsenartigen Lagerschale 5 angeformt. Damit bildet die Außenhülse 3 gemeinsam mit dem Elastomerringelement 4 und der inneren Lagenschale 5 ein einstückiges Bauteil. Die hülsenartige Lagerschale 5 weist innenradial eine Ausnehmung auf, welche unter Bildung eines Kugelgelenks gleitend an einer korrespondierenden außerradialen sphärischen Anformung 6 am Innenteil 1 zur Anlage kommt. Zur Montage auf das Innenteil 1 wird die korrespondierende Lagerschale 5 axial geteilt aufgebaut und besteht aus einem Innenhülsengrundteil 7, das mit einem Innenhülsendeckelteil 8 durch UltraschallSchweißen zusammengefügt ist. Wie detaillierter aus der Figur 2 hervorgeht, ist zur Abdichtung des Gummilagerbereichs im beidseitigen Übergangsbereich zwischen der sphärischen Anformung 6 des Innenteils 1 und den benachbarten Rohrabschnitten 9a, 9b je ein Dichtring 10a, 10b vorgesehen, welcher in jeweils korrespondierende Umfangsnuten seitens des Innenteils 1 angeordnet sind. Als zusätzliche Abdichtungsmaßnahme können beide Stirnseiten 11a, 11b des Gummilagers mit einem zwischen dem Innenteil 1 einerseits und der Lagerschale 5a andererseits befestigten - hier nicht weiter dargestellten- Faltenbalk versehen werden.

Ein verrippter Kragenrand 12 bildet eine elastische Anschlagbegrenzung zwischen dem Innenteil 1 und der Lagerschale 5. Das erfindungsgemäße schwingungsgedämpfte Gummilager entfaltet seine schwingungsdämpfenden Eigenschaften insbesondere bei einer radialen Belastung infolge einer hier wirksamen Druckbelastung auf den Elastomerringkörper 4. Bei einer axialen Belastung wird ein Auswandern des Innenteils 1 aus der Außenhülse 3 wegen des Kugelgelenks vermieden. Das Kugelgelenk ermöglicht einen Winkelversatz des Innenteils 1 gegenüber der Außenhülse 3 in den Grenzen, welche durch Endabschnitte der Lagerschale 5 definiert sind. Wegen des Kugelgelenks ermöglicht das erfindungsgemäße Gummilager eine ungehinderte Drehbewegung des Innenteils relativ zur Außenhülse. Das mit den vorstehend erläuterten Freiheitsgraden ausgestattete schwingungsgedämpfte Gummilager kann durch entsprechende Auswahl des Werkstoffs des Elastomerringkörpers ein großes Federsteifigkeitsspektrum bei gleich guten Gleitreibungseigenschaften zwischen den relativ zueinander bewegbaren Bauteilen sicherstellen.

### Bezugszeichenliste

- **1**: Innenteil
- **2**: Durchgangsbohrung
- **3**: Außenhülse
- **4**: Elastomerringkörper
- **5**: Lagerschale
- **6**: Anformung
- **7**: Innenhülsengrundteil
- **8**: Innenhülsendeckelteil
- **9**: Rohrabschnitt
- **10**: Dichtung
- **11**: Stirnseite
- **12**: Kragenrand

## Patentansprüche

1. Schwingungsgedämpftes Gummilager, insbesondere für die Befestigung eines Schwingungsdämpfers an einem Trägerteil eines Fahrzeuges, mit einem Innenteil (1), das von einer Außenhülse (3) umgeben ist, wobei zwischen dem Innenteil (1) und der Außenhülse (3) ein Elastomerringkörper (4) zur Schwingungsdämpfung vorgesehen ist, wobei der Elastomerringkörper (4) auBenradial an der Innenwandung der Außenhülse (3) angebracht ist und innenradial an einer hülsenartigen Lagerschale (5) angebracht ist, die unter Bildung eines Kugelgelenks gleitend mit dem Innenteil (1) zusammenwirkt,
**dadurch gekennzeichnet,**
**dass** im beidseitigen Übergangsbereich zwischen einer sphärischen Anformung (6) des Innenteils (1) und benachbarten Rohrabschnitten (9a,9b) von im Wesentlichen gleichmäßiger Wandstärke je ein Dichtring (10a,10b) in Umfangsnuten angeordnet zur Abdichtung des hiervon eingeschlossenen Gummilagerbereichs vorgesehen ist.

2. Schwingungsgedämpftes Gummilager nach Anspruch 1,
**dadurch gekennzeichnet,**
**dass** der Elastomerringkörper (4) an der Außenhülse (3) einerseits sowie an der Lagerschale (5) andererseits unter Bildung eines einstückigen Bauteils anvulkanisiert oder angeklebt ist.

3. Schwingungsgedämpftes Gummilager nach Anspruch 1 oder 2,
**dadurch gekennzeichnet,**
**dass** über die Außenhülse (3) eine Befestigung an einem ersten Trägerteil durch Einpressen, Einkleben, Einschrauben oder Einspannen in eine korrespondierenden Ausnehmung des ersten Trägerteils erfolgt.

4. Schwingungsgedämpftes Gummilager nach Anspruch 1 oder 2,
**dadurch gekennzeichnet,**
**dass** die Außenhülse (3) Bestandteil des ersten Trägerteils ist und einstückig hiermit ausgebildet ist.

5. Schwingungsgedämpftes Gummilager nach einem der vorstehenden Ansprüche,
**dadurch gekennzeichnet,**
**dass** das Innenteil (1) im wesentlichen rohrförmig mit einer außenradialen sphärischen Anformung (6) zur Bildung des Kugelgelenks gemeinsam mit der entsprechend geformten Lagerschale (5) ausgebildet ist, um eine Schraube zur Befestigung an einem zweiten Trägerteil aufzunehmen.

6. Schwingungsgedämpftes Gummilager nach einem der vorstehenden Ansprüche,
**dadurch gekennzeichnet,**
**dass** zur Abdichtung des Gummilagerbereichs zu beiden Stirnseiten (11a, 11b) je ein zwischen dem Innenteil (1) einerseits und der Lagerschale (5) oder der Außenhülse (3) andererseits angeordneter Faltenbalg vorgesehen ist.

7. Schwingungsgedämpftes Gummilager nach einem der vorstehenden Ansprüche,
**dadurch gekennzeichnet,**
**dass** zur Montage auf das Innenteil (1) die korrespondierende Lagerschale (5) axial geteilt aufgebaut ist, wobei ein Innenhülsengrundteil (7) mit einem Innenhülsendeckelteil (8) zusammenfügbar sind.

8. Schwingungsgedämpftes Gummilager nach Anspruch 7,
**dadurch gekennzeichnet,**
**dass** das Zusammenfügen lösbar über eine Schraub- oder Schnappverbindung oder unlösbar über eine Kleb- oder Schweißverbindung erfolgt.

9. Schwigungsgedämpftes Gummilager nach einem der vorstehenden Ansprüche,
**dadurch gekennzeichnet,**
**dass** das Innenteil (1), die hiermit korrespondierende Lagerschale (5) und/oder die Außenhülse (3) aus einem Kunststoff, einem Leichtmetall oder aus Stahl hergestellt ist.

## Claims

1. Vibration-damped rubber bearing, in particular for securing a vibration damper to a bearing part of a motor vehicle, comprising an inner part (1) surrounded by an outer sleeve (3) with an elastomer ring body (4) provided between the inner part (1) and the outer sleeve (3) for vibration-damping purposes, which elastomer ring body (4) is mounted on the internal wall of the outer sleeve (3) radially towards the outside and on a sleeve-type bearing shell (5) radially towards the inside, which co-operates in a sliding arrangement with the inner part (1) forming a ball and socket joint,
**characterised in that**,
in the transition region at either end between an integrally formed spherical part (6) of the inner part (1) and adjacent tubular portions (9a, 9b) of an essentially constant wall thickness, a sealing ring (10a, 10b) is respectively disposed in peripheral grooves in order to seal the rubber bearing region enclosed thereby.

2. Vibration-damped rubber bearing as claimed in claim 1,
**characterised in that**
the elastomer ring body (4) is vulcanised or bonded to the outer sleeve (3) on the one hand and to the bearing shell (5) on the other hand, forming an integral component.

3. Vibration-damped rubber bearing as claimed in claim 1 or 2,
**characterised in that**,
the outer sleeve (3) is secured to a first bearing part by pressing it, bonding it, securing it or clamping it into a matching recess of the first bearing part.

4. Vibration-damped rubber bearing as claimed in claim 1 or 2,
**characterised in that**
the outer sleeve (3) is a constituent part of the first bearing part and is of an integral design therewith.

5. Vibration-damped rubber bearing as claimed in one of the preceding claims,
**characterised in that**
the inner part (1) is of an essentially tubular shape with an integrally formed spherical part (6) radially on the outside in order to form the ball and socket joint in conjunction with the correspondingly shaped bearing shell (5), in order to accommodate a screw for fixing to a second bearing part.

6. Vibration-damped rubber bearing as claimed in one of the preceding claims,
**characterised in that**,
in order to seal the rubber bearing region at both end faces (11a, 11b), a bellows is provided respectively between the inner part (1) on the one hand and the bearing shell (5) or outer sleeve (3) on the other hand.

7. Vibration-damped rubber bearing as claimed in one of the preceding claims,
**characterised in that**
in order to assemble the inner part (1), the co-operating bearing shell (5) is of an axially split construction, in which case an inner sleeve base part (7) can be assembled with an inner sleeve cover part (8).

8. Vibration-damped rubber bearing as claimed in claim 7,
**characterised in that**
the assembly is releasable by means of a screw or snap-fit connection or non-releasable due to a bonded or welded connection.

9. Vibration-damped rubber bearing as claimed in one of the preceding claims,
**characterised in that**
the inner part (1), the bearing shell (5) co-operating with it and/or the outer sleeve (3) are made from a plastic material, a lightweight metal or steel.

## Revendications

1. Palier en caoutchouc amortisseur de vibrations, en particulier pour la fixation d'un amortisseur de vibrations sur un élément porteur d'un véhicule, comprenant un élément intérieur (1) entouré par une douille extérieure (3), un corps annulaire élastomère (4) étant disposé entre l'élément intérieur (1) et la douille extérieure (3) de manière à amortir des vibrations, le corps annulaire élastomère (4) étant monté, par sa face radiale extérieure, sur la paroi intérieure de la douille extérieure (3) et, par sa face radiale intérieure, sur une coquille de palier (5) en forme de douille qui coopère, en glissant, avec l'élément intérieur en formant avec lui une articulation à rotule,
**caractérisé en ce que** chacun des deux côtés de la zone de transition comprise entre une conformation sphérique (6) de l'élément intérieur (1) et des sections tubulaires adjacentes (9a, 9b) aux épaisseurs de paroi sensiblement uniformes, comprend respectivement une bague d'étanchéité (10a, 10b), disposée dans chacune des gorges périphériques, pour fermer de façon étanche la zone de palier en caoutchouc enfermée par celles-ci.

2. Palier en caoutchouc amortisseur de vibrations selon la revendication 1, **caractérisé en ce que** le corps annulaire élastomère (4) est vulcanisé ou collé d'un côté sur la douille extérieure (3), et de l'autre côté sur la coquille de palier (5), en formant avec eux un composant monobloc.

3. Palier en caoutchouc amortisseur de vibrations selon les revendications 1 ou 2, **caractérisé en ce qu'**une fixation à un premier élément porteur se fait par l'intermédiaire de la douille extérieure (3), par emmanchement à la presse, collage, vissage ou serrage dans un évidement correspondant du premier élément porteur.

4. Palier en caoutchouc amortisseur de vibrations selon les revendications 1 ou 2, **caractérisé en ce que** la douille extérieure (3) fait partie intégrante du premier élément porteur et est faite d'un seul tenant avec celui-ci.

5. Palier en caoutchouc amortisseur de vibrations selon l'une des revendications précédentes, **caractérisé en ce que** l'élément intérieur (1) est configuré de façon essentiellement tubulaire, comprenant une conformation radiale sphérique extérieure (6) destinée à former une articulation à rotule en conjonction avec une coquille de palier (5) de forme correspondante, de manière à recevoir une vis pour sa fixation à un deuxième élément porteur.

6. Palier en caoutchouc amortisseur de vibrations selon l'une des revendications précédentes, **caractérisé en ce que**, pour couvrir de façon étanche la zone de palier en caoutchouc, un soufflet de protection est prévu respectivement aux deux faces frontales (11a, 11b) en étant disposé entre l'élément intérieur (1) d'une part, et la coquille de palier (5) ou la douille extérieure (3) d'autre part.

7. Palier en caoutchouc amortisseur de vibrations selon l'une des revendications précédentes, **caractérisé en ce que**, pour permettre son montage sur l'élément intérieur (1), la coquille de palier correspondante (5) est conçue de façon axialement divisée, un élément de base (7) de douille intérieure pouvant y être assemblé avec un élément d'embout (8) de douille intérieure.

8. Palier en caoutchouc amortisseur de vibrations selon la revendication 7, **caractérisé en ce que** l'assemblage est fait de façon démontable au moyen d'une liaison à vis ou à enclenchement, ou de façon indémontable au moyen d'une liaison collée ou soudée.

9. Palier en caoutchouc amortisseur de vibrations selon l'une des revendications précédentes, **caractérisé en ce que** l'élément intérieur (1), la coquille de palier (5) correspondant à celui-ci, et/ou la douille extérieure (3) est/sont fabriqué(s) en une matière plastique, un métal léger ou en acier.
